# EUROPEAN PATENT SPECIFICATION

(11) **EP 1 176 844 B1**
(45) Date of publication and mention of the grant of the patent: **29.06.2011**
(21) Application number: 01303765.0
(22) Date of filing: 25.04.2001
(51) Int. Cl.: H04L 9/32, H04W 12/06

(54) **Telecommunication system and method for authenticating information related to a subscriber**
Telekommunikationssystemen und Verfahren zur Authentifizierung von einem Teilnehmer betreffende Informationen
Système de télécommunications et procédé d'authentification des informations relatives à un utilisateur

(30) Priority: 25.07.2000 GB 0018279
(43) Date of publication of application: 30.01.2002
(73) Proprietor: VODAFONE LIMITED, Newbury Berkshire RG14 2FN (GB)
(72) Inventor: Mayes, Keith Edward, Hungerford RG17 0LA (GB); Bone, Nicholas, Newbury RG14 2PN (GB); Walker, Michael, Newbury RG14 7AF (GB)
(74) Representative: Keston, David Arthur

(56) References cited:
- WO-A-00/42794
- WO-A-97/40616
- PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, vol. 11, no. 5, 1 September 1997 (1997-09-01), pages 50-55, XP000699941 ISSN: 0890-8044

## Description

The invention relates to telecommunication systems and methods. Telecommunication systems and methods according to the invention, and to be described in more detail below by way of example only, are concerned with the secure transmission and receipt of signals sent within a telecommunications system which may be partly or wholly wired or non-wired, and more specifically are concerned with authentication processes such as may be required and used in the carrying out of transactions (which may or may not be commercial transactions) between the subscriber and a third party and taking place at least partly over such a telecommunication system.

WO-A-00/42794 refers to a system where a remote database receives a first PIN from the mobile terminal and uses a look up table to determine whether that first PIN has "approved status". If the look up table determines that the first PIN has approved status a second PIN is generated and sent to the SIM of the mobile terminal.

PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, vol. 11, no. 5, 1 September 1997 (1997-09-01), pages 50-55, XP000699941 ISSN: 0890-8044 discloses a mutual authentication and session key exchange protocol for mobile communication systems based on certificates. An "offline" authentication mechanism based on a time-expiring certificate is discussed, which allows a mobile terminal in a visited network to have its certificate authenticated by that visited network without reference to the home network (i.e. offline) provided that the certificate has not expired.

According to the invention, there is provided a method of authenticating information as defined in claim 1.

According to the invention, there is further provided a telecommunications system capable of authenticating information as defined in claim 10.

Optional features of the invention are defined in the dependent claims.

Telecommunication systems and methods according to the invention, for facilitating encryption and authentication processes such as may be used in commercial or non-commercial transactions between a subscriber to the telecommunications system and a third party will now be described, by way of example only, with reference to the accompanying diagrammatic drawings in which:
Figure 1 illustrates the operation of a GSM telephone network;
Figure 2 shows steps in the manufacture of a SIM used in accordance with the invention; and
Figure 3 shows steps carried out in accordance with the invention in performing an e-commerce transaction.

The telecommunications systems to be described initially, and to which the invention may be applied, are cellular telephone systems of the GSM type. However, the invention may be applied in other telecommunication systems whether wholly or partly wired or non-wired, as will be explained in more detail later.

In a GSM telephone system, subscribers are issued with smart cards (Subscriber Identity Modules or SIMs). The term "subscriber" is used herein to mean not only a contract subscriber who has a monthly subscription and who is normally billed in arrears for his usage of the system but also pre-pay subscribers who pay in advance for a predetermined amount of system usage. In the general case, the identity of a contract subscriber is known but the identity of a pre-pay subscriber may be unknown. The SIM stores information relating to the subscriber. This information enables the subscriber to make and receive telephone calls by inserting the SIM into a suitable mobile terminal or telephone. The stored information includes a subscriber identity field (IMSI) comprising data providing a unique identity within the system, and a subscriber "secret key" (Ki). When the subscriber activates the mobile terminal, in order to make or receive a call, an authentication process is first carried out between the mobile telephone and the network, to ensure the genuineness of the SIM. This process involves a challenge/response process, with exchange of data between the mobile telephone and the network, the mobile terminal using the subscriber secret key and the IMSI and, normally, an authentication algorithm, to generate authentication data which can then be compared by the network with matching information which the network holds. Upon satisfactory completion of this process, the subscriber can then make or receive the call. It will be understood that, even if the identity of the subscriber is known to the network operator, the SIM will not itself identify him. Indeed, as discussed in more detail below, the SIMs are normally produced in large quantities and carrying respective subscriber identity fields and subscriber secret keys before they are issued to subscribers.

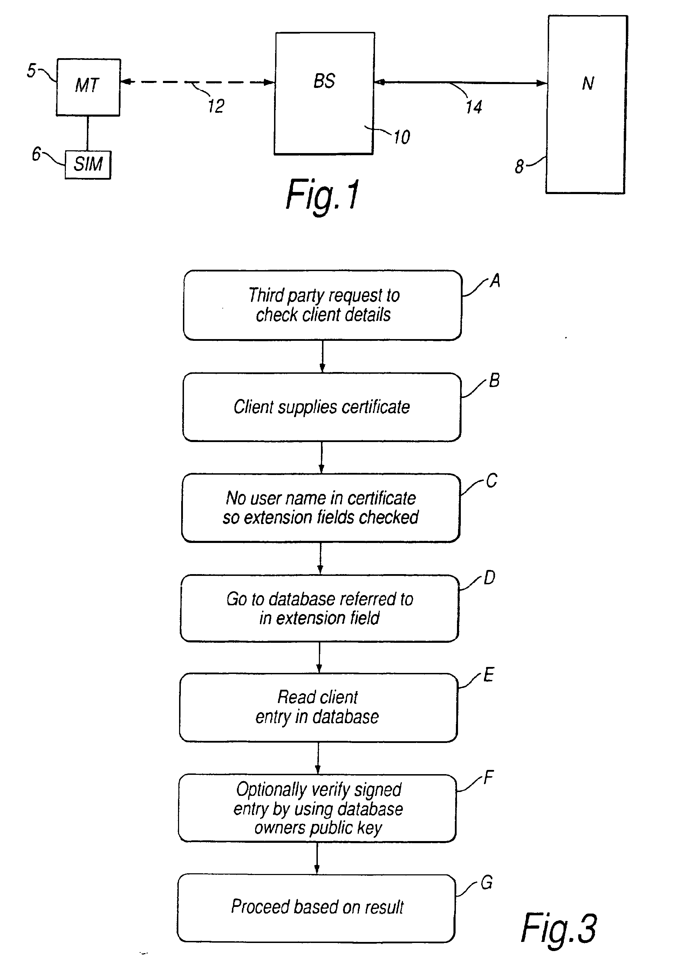

This process is diagrammatically illustrated in Figure 1, which shows the mobile telephone (MT) 5, with its SIM card 6 in communication with the network (N) 8 via a base station (BS) 10 over a radio link 12 and another link 14 which may be a radio link or a landline.

The network operator uses a trusted manufacturer to produce the SIMs. The SIM manufacturer will place a particular IMSI on the SIM and associate it with a particular subscriber secret key (Ki). When, later, a subscriber has purchased telephone usage from the operator, the subscriber's identity may or may not be known; in the case of an anonymous pre-pay account the subscriber's identity will in general not be known. Nevertheless, because of the trust relationship between the network operator and the SIM manufacturer, the network operator can confidently provide telephone facilities within limits which it imposes on itself according to its knowledge of the subscriber. However, the trust relationship between the network operator and the SIM manufacturer may not be recognised by a third party wishing to enter into a transaction with the subscriber using the SIM. Such a transaction may be a commercial transaction (e-commerce) in which case the third party is a potential supplier of goods or services. Instead, the transaction may be non-commercial - for example, the third party may be seeking the subscriber's opinion, for example for market research or polling purposes or simply wanting to carry out communication with the subscriber in the knowledge that the subscriber is a genuine subscriber. In each of these cases, the third party may not need to know the actual identity of the subscriber, but the third party does need to know that the subscriber is "genuine" - that is, that the subscriber's identity within the telephone network is genuine. For example, where the proposed commercial transaction is with a subscriber who is a contract subscriber to the telephone network, the transaction may involve a payment by the subscriber to the third party supplier which is simply debited to the subscriber's account with the network operator and later transferred to the credit of the third party subscriber. In such a case, the supplier does not need to know the identity of the subscriber but he does need to be able to assure himself that the subscriber is a genuine subscriber. In the case of a pre-pay subscriber to the network, it is still possible for a third party supplier to carry out a commercial transaction; in such a case, the payment for the transaction could be debited against the sum which the subscriber has pre-paid for telephone usage or against an account which the subscriber has previously placed in credit for the purpose of commercial transactions. Again, therefore, the third party supplier does not need to know the identity of the subscriber but he does need to know that the subscriber is a genuine subscriber.

In order to deal with this problem, therefore, the invention proposes to "bind" the secret information relating to the telecommunications-identifying information on the SIM (e.g. the IMSI and/or the subscriber secret key, Ki or a function of it or them) with other secret information which can be used and is widely recognised in commercial and other transactions - in particular the secret part of a public/private key, for example - the binding of these two types of secret information being certified and digitally signed in a widely recognised way, preferably by a Certificate Authority. This "binding" operation will normally be carried out at the time when the SIM is manufactured.

Therefore, a third party who is addressed by a subscriber to the telephone network who uses such a SIM and wishes to enter into a transaction with the third party, can use the digitally signed Certificate to confirm the authenticity of the subscriber - that is, that the telecommunication identifying information on the SIM (the IMSI and the Ki) is genuine.

The third party can check that the secret information is genuine by referring to the Certificate.

Additional information can be bound onto the SIM and certified by the Certificate. Examples of such additional information are PINs, biometric information relating to a particular person, and a particular person's electronic signature (or a function of any of them). Thus, a third party, trusting the Certificate, can check that the subscriber's PIN, biometric information and/or signature are genuine. It will be understood that although the PIN, the biometric information and the electronic signature all relate to a particular individual, the third party may not need to know the actual identity of that individual, merely that that information is genuine.

Although the foregoing description has related to the use of a physical SIM, instead a "virtual" SIM may be used in the same way - that is, in the form of an output file or stored data which carries all the relevant data and can be used to produce a physical SIM later.

There may, of course, be circumstances when a third party does wish to know the actual identity of the subscriber - that is, for example, the subscriber's name and address and, perhaps, other details relating to the subscriber (e.g. credit card details). In accordance with the invention, therefore, the Certificate which is used to bind together the secret telecommunications identity (or a function of it) and the secret part of the public/private key or other commercial secret information is arranged to contain a reference to a particular location in a secure external database. In other words, that part of the Certificate which would otherwise identify the subscriber (or the "subject" of the Certificate) is empty but the certificate contains a reference to the external database. This external database holds details of the subscriber relevant to each SIM (as and when such details become available). In this way, therefore, the SIMs can be produced in advance by the SIM manufacturer but can nevertheless be used subsequently as a means of initiating or otherwise taking part in e-commerce or other transactions requiring knowledge of the subscriber's identity - because a potential supplier of goods or services to the subscriber-customer can now rely on information relating to the subscriber's identity which is obtained from the secure external database via the SIM.

Therefore, it becomes unnecessary to delay the issuance of a certificate binding the e-commerce information to the GSM information on the SIM until the subscriber's identity is known.

The use of the secure external database to which an e-commerce supplier is pointed by the secret e-commerce information on the SIM enables the system to accommodate changes in the details of the customer easily, because such changes simply result in changes to the database and not to the certificate. The system is ideal for use with pre-pay systems where the subscriber remains anonymous. If an anonymous pre-pay subscriber becomes a registered subscriber (that is, at least some details of his identity become known), all that is necessary is for the appropriate entry in the secure external database to be changed.

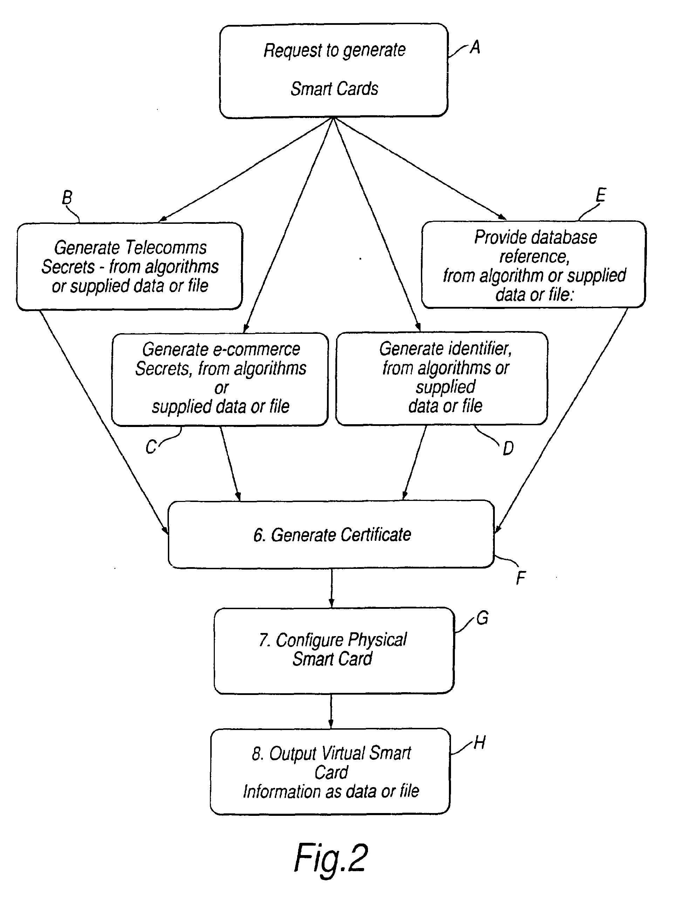

Figure 2 shows the steps in the manufacture of a SIM in accordance with this feature of the invention.

At step A, the network operator requests the creation of a number of SIMs.

At step B, the secret GSM information (primarily, the authentication key and/or algorithms) are generated or read from a suitable data source.

At step C, the e-commerce secrets (e.g. public-private key information) is generated from algorithms or a suitable data source.

At step D, an identifier is generated from an algorithm or from a data source. In the particular example, the identifier could be the IMSI (or a function of it).

At step E, a reference field relating to a particular entry in the secure external database is generated from an algorithm or a suitable data source.

It will be appreciated that steps B to E do not need to take place in that order.

At step F, the certificate is generated, preferably from a recognised certificate authority.

At step G, the SIM is produced.

Instead of producing physical SIMs, the system may produce virtual SIMs (step H).

In the secure external database, there is a respective entry for each GSM identifier (e.g. the IMSI). Each entry may contain user details such as name, address, credit card number and other personal information as well as other telecommunications and e-commerce secret information. In the case of an anonymous pre-pay subscriber, the entry may not contain the subscriber's name and address but may simply contain details of a pre-pay account. The information in each entry of the database may be signed by the database owner to confirm the association of the GSM identifier with the information.

Figure 3 shows steps which may take place in an e-commerce transaction using the secure external database.

At step A, the supplier generates a query to the subscriber (the potential customer), asking for authentication before agreeing to an e-commerce transaction. In response (step B), the subscriber through his SIM provides the certificate confirming the association of the e-commerce information with the identifier on the SIM (normally, the IMSI or a function of it). The supplier checks the certificate.

At step C, the supplier discovers that there is no name in the "subject" field of the certificate, and the "extension" fields of the certificate are then checked. At step D, a reference is found to an entry in the secure external database.

At step E, the supplier reads the appropriate entry in the external database and obtains the subscriber's details.

At step F, the supplier can optionally verify the database entry by checking the signature with the public key of the database owner.

At step G, the supplier proceeds with the transaction in accordance with the information obtained from the external database.

The supplier may decide simply to trust the external database instead of verifying each entry (see optional step F above), or could instead optionally and occasionally verify the database itself.

As stated above, the application of the invention is not restricted to GSM telephone systems but can be used in any other telecommunication system whether wholly or partly wired or non-wired. In particular, though without restriction, it may be used with Third Generation (3G) telecommunication systems.

The invention can be implemented in other forms of smart card usable in telecommunication systems such as WIMs (Wap Identity Modules) or USIMs (SIMs for UMTS telecommunication systems) or hybrids of such smart cards.

## Claims

1. A method of authenticating information relating to predetermined details of a subscriber to a telecommunications network (8) for use by a third party, wherein an identifier relating to the subscriber's use of the network (8) is associated with the information and the association is authenticated in a manner recognised by the third party, **characterised in that** the identifier relating to the subscriber's use of the network includes the subscriber's IMSI or a function of it, and **in that** the association is authenticated in a manner which provides the third party with a reference to a particular location within a database storing at least some of the predetermined details of the subscriber and which enables the third party to access those predetermined details of the subscriber stored in the database, which reference to the particular location within the database is not available to the third party prior to the authentication of the association.

2. A method according to claim 1, **characterised in that** the telecommunications network (8) is a mobile telephone network and the identifier is carried in a data storage device, the data storage device being a smart card (6).

3. A method according to claim 2, wherein the smart card (6) comprises a SIM.

4. A method according to any preceding claim, **characterised in that** the identifier relating to the subscriber's use of the network (8) is authenticated by means of a digitally signed certificate issued by a Certificate Authority.

5. A method according to any preceding claim, **characterised in that** the information relating to the predetermined details of the subscriber does not identify the subscriber.

6. A method according to any preceding claim, **characterised in that** the information relating to the predetermined details of the subscriber includes information by which the subscriber may subsequently authenticate himself.

7. A method according to claim 6, **characterised in that** the information by which the subscriber may subsequently authenticate himself includes one or more of the subscriber's PIN, electronic signature, and biometric information or a function thereof.

8. A method according to any preceding claim, **characterised by** the step of responding to changes in at least some of the information relating to the predetermined details of a particular subscriber by amending the respective entry in the database.

9. A method according to any preceding claim, **characterised in that** the entries in the database are authenticated.

10. A telecommunications system, in which each subscriber uses a data storage device (6) for access to the system, the data storage device (6) carrying an identifier relating to the subscriber's use of the system (8), in which the identifier is associated with information relating to predetermined details of the subscriber, and in which there is provided means operative to authenticate the association in a manner recognised by a third party, **characterised in that** the identifier includes the respective subscriber's IMSI or a function of it, and **in that** the association is authenticated in a manner which provides the third party with a reference to a particular location within a database storing at least some of the predetermined details of the subscriber and which enables the third party to access those predetermined details of the subscriber stored in the database, which reference to the particular location within the database is not available to the third party prior to the authentication of the association.

11. A system according to claim 10, **characterised in that** it is a GSM mobile telephone network and the data storage device (6) is a smart card.

12. A system according to claim 11, wherein the smart card comprises a SIM.

13. A system according to any one of claims 10 to 12, **characterised in that** the identifier is authenticated by means of a digitally signed certificate issued by a Certificate Authority, the certificate containing a reference to a particular entry in the database.

14. A system according to any one of claims 10 to 13, **characterised in that** the information relating to the predetermined details of the subscriber do not identify the subscriber.

15. A system according to any one of claims 10 to 14, including the database, which database is an external database, wherein the information comprises authorising data for use by the third party in relation to transactions to be carried out with the subscriber at least partly by means of the system (8), the identifier and the authorising data being associated with each other, the system (8) including means for authentication the association of the identifier and the authorising data in a manner accepted by the third party and which addresses a respective entry in the database, each entry in the database containing details relating to a particular subscriber to the network.

## Patentansprüche

1. Verfahren zum Authentifizieren von Informationen über vorbestimmte Details eines Teilnehmers eines Telekommunikationsnetzwerks (8) für die Verwendung durch eine Fremdpartei, wobei eine Kennung in Bezug auf die Benutzung des Netzwerks (8) durch den Teilnehmer mit den Informationen assoziiert ist und die Assoziation auf eine von der Fremdpartei erkannte Weise authentifiziert wird, **dadurch gekennzeichnet, dass** die Kennung über die Benutzung des Netzwerks durch den Teilnehmer die IMSI des Teilnehmers oder eine Funktion davon beinhaltet, und dadurch, dass die Assoziation auf eine solche Weise authentifiziert wird, dass die Fremdpartei einen Hinweis auf eine bestimmte Stelle in einer Datenbank erhält, die wenigstens einige der vorbestimmten Details des Teilnehmers speichert und es der Fremdpartei gestattet, auf diese vorbestimmten Details des in der Datenbank gespeicherten Teilnehmers zuzugreifen, wobei der Hinweis auf die bestimmte Stelle in der Datenbank der Fremdpartei vor der Authentifizierung der Assoziation nicht zur Verfügung steht.

2. Verfahren nach Anspruch 1, **dadurch gekennzeichnet, dass** das Telekommunikationsnetzwerk (8) ein Mobiltelefonnetz ist und die Kennung in einem Datenspeichergerät geführt wird, wobei das Datenspeichergerät eine Chipkarte (6) ist.

3. Verfahren nach Anspruch 2, wobei die Chipkarte (6) ein SIM umfasst.

4. Verfahren nach einem der vorherigen Ansprüche, **dadurch gekennzeichnet, dass** die Kennung in Bezug auf die Benutzung des Netzwerks (8) durch den Teilnehmer mit einem digital signierten Zertifikat authentifiziert wird, das von einer Zertifikationsstelle ausgegeben wird.

5. Verfahren nach einem der vorherigen Ansprüche, **dadurch gekennzeichnet, dass** die Informationen in Bezug auf die vorbestimmten Details des Teilnehmers den Teilnehmer nicht identifizieren.

6. Verfahren nach einem der vorherigen Ansprüche, **dadurch gekennzeichnet, dass** die Informationen in Bezug auf die vorbestimmten Details des Teilnehmers Informationen beinhalten, anhand derer sich der Teilnehmer nachfolgend selbst authentifizieren kann.

7. Verfahren nach Anspruch 6, **dadurch gekennzeichnet, dass** die Informationen, anhand derer sich der Teilnehmer nachfolgend selbst authentifizieren kann, ein oder mehrere der Folgenden beinhalten: PIN des Teilnehmers, elektronische Signatur und biometrische Informationen oder eine Funktion davon.

8. Verfahren nach einem der vorherigen Ansprüche, **gekennzeichnet durch** den Schritt des Reagierens auf Änderungen an wenigstens einigen der Informationen in Bezug auf die vorbestimmten Details eines bestimmten Teilnehmers **durch** Ändern des jeweiligen Eintrags in der Datenbank.

9. Verfahren nach einem der vorherigen Ansprüche, **dadurch gekennzeichnet, dass** die Einträge in der Datenbank authentifiziert werden.

10. Telekommunikationssystem, in dem jeder Teilnehmer ein Datenspeichergerät (6) für den Zugriff auf das System benutzt, wobei das Datenspeichergerät (6) eine Kennung in Bezug auf die Benutzung des Systems (8) durch den Teilnehmer führt, wobei die Kennung mit Informationen über vorbestimmte Details des Teilnehmers assoziiert ist und wobei Mittel vorgesehen sind, um die Assoziation auf eine von einer Fremdpartei erkannte Weise zu authentifizieren, **dadurch gekennzeichnet, dass** die Kennung die IMSI des jeweiligen Teilnehmers oder eine Funktion davon beinhaltet, und dadurch, dass die Assoziation auf eine solche Weise authentifiziert wird, dass die Fremdpartei einen Hinweis auf eine bestimmte Stelle in einer Datenbank gibt, die wenigstens einige der vorbestimmten Details des Teilnehmers speichert, und dass die Fremdpartei auf diese vorbestimmten Details des in der Datenbank gespeicherten Teilnehmers zugreifen kann, wobei der Hinweis auf die bestimmte Stelle in der Datenbank für die Fremdpartei vor dem Authentifizieren der Assoziation nicht zur Verfügung steht.

11. System nach Anspruch 10, **dadurch gekennzeichnet, dass** es ein GSM-Mobiltelefonnetz ist und dass das Datenspeichergerät (6) eine Chipkarte ist.

12. System nach Anspruch 11, wobei die Chipkarte ein SIM umfasst.

13. System nach einem der Ansprüche 10 bis 12, **dadurch gekennzeichnet, dass** die Kennung mittels eines digital signierten Zertifikats authentifiziert wird, das von einer Zertifikationsstelle ausgegeben wird, wobei das Zertifikat einen Hinweis auf einen bestimmten Eintrag in der Datenbank enthält.

14. System nach einem der Ansprüche 10 bis 13, **dadurch gekennzeichnet, dass** die Informationen über die vorbestimmten Details des Teilnehmers den Teilnehmer nicht identifizieren.

15. System nach einem der Ansprüche 10 bis 14, das die Datenbank beinhaltet, wobei die Datenbank eine externe Datenbank ist, wobei die Informationen Autorisierungsdaten für die Verwendung durch die Fremdpartei in Bezug auf Transaktionen beinhalten, die mit dem Teilnehmer wenigstens teilweise mittels des Systems (8) durchgeführt werden, wobei die Kennung und die Autorisierungsdaten miteinander assoziiert sind, wobei das System (8) Mittel zum Authentifizieren der Assoziation der Kennung und der Autorisierungsdaten auf eine von der Fremdpartei akzeptierte Weise beinhaltet, unter Adressierung eines jeweiligen Eintrags in der Datenbank, wobei jeder Eintrag in der Datenbank Details in Bezug auf den jeweiligen Teilnehmer des Netzwerks enthält.

## Revendications

1. Procédé d'authentification des informations relatives à des détails prédéterminés d'un abonné à un réseau de télécommunications (8) en vue d'une utilisation par un tiers, cas dans lequel un identifiant relatif à l'utilisation du réseau (8) par l'abonné est associé aux informations et l'association est authentifiée d'une manière reconnue par le tiers, **caractérisé en ce que** l'identifiant relatif à l'utilisation du réseau par l'abonné englobe l'IMSI de l'abonné, ou une fonction de celui-ci, et **en ce que** l'association est authentifiée d'une manière qui procure au tiers une référence à un emplacement spécifique au sein d'une base de données laquelle stocke au moins quelques-uns des détails prédéterminés de l'abonné, et qui permet au tiers d'accéder à ces détails prédéterminés de l'abonné stockés dans la base de données, cette référence à l'emplacement spécifique au sein de la base de données n'étant pas mis à la disposition du tiers avant l'authentification de l'association.

2. Procédé selon la revendication 1, **caractérisé en ce que** le réseau de télécommunications (8) est un réseau téléphonique mobile et que l'identifiant est renfermé dans un dispositif de stockage de données, le dispositif de stockage de données étant une carte à puce (6).

3. Procédé selon la revendication 2, la carte à puce (6) comportant un SIM.

4. Procédé selon l'une quelconque des revendications précédentes, **caractérisé en ce que** l'identifiant relatif à l'utilisation du réseau (8) par l'abonné est authentifié par le biais d'un certificat à signature numérique émis par une autorité de certification.

5. Procédé selon l'une quelconque des revendications précédentes, **caractérisé en ce que** les informations relatives aux détails prédéterminés de l'abonné ne permettent pas d'identifier l'abonné.

6. Procédé selon l'une quelconque des revendications précédentes, **caractérisé en ce que** les informations relatives aux détails prédéterminés de l'abonné contiennent des informations grâce auxquelles l'abonné peut s'authentifier ultérieurement.

7. Procédé selon la revendication 6, **caractérisé en ce que** les informations grâce auxquelles l'abonné peut s'authentifier ultérieurement englobent un ou plusieurs des éléments suivants, à savoir le PIN de l'abonné, la signature électronique et les informations biométriques ou une fonction de celles-ci.

8. Procédé selon l'une quelconque des revendications précédentes, **caractérisé par** l'étape consistant à réagir à des changements survenus dans quelques-unes au moins des informations relatives aux détails prédéterminés d'un abonné spécifique grâce à la modification de l'entrée respective dans la base de données.

9. Procédé selon l'une quelconque des revendications précédentes, **caractérisé en ce que** les entrées figurant dans la base de données sont authentifiées.

10. Système de télécommunications, dans lequel chaque abonné utilise un dispositif de stockage de données (6) pour accéder au système, le dispositif de stockage de données (6) renfermant un identifiant relatif à l'utilisation du réseau (8) par l'abonné, dans lequel l'identifiant est associé à des informations relatives aux détails prédéterminés de l'abonné, et dans lequel on a prévu des moyens qui opèrent de façon à authentifier l'association d'une manière qui est reconnue par un tiers, **caractérisé en ce que** l'identifiant englobe l'IMSI respectif de l'abonné, ou une fonction de celui-ci, et **en ce que** l'association est authentifiée d'une manière qui procure au tiers une référence à un emplacement spécifique au sein d'une base de données laquelle stocke au moins quelques-uns des détails prédéterminés de l'abonné, et qui permet au tiers d'accéder à ces détails prédéterminés de l'abonné stockés dans la base de données, cette référence à l'emplacement spécifique au sein de la base de données n'étant pas mis à la disposition du tiers avant l'authentification de l'association.

11. Système selon la revendication 10, **caractérisé en ce qu'**il s'agit d'un réseau téléphonique mobile GSM et que le dispositif de stockage de données (6) est une carte à puce.

12. Système selon la revendication 11, la carte à puce comportant un SIM.

13. Système selon l'une quelconque des revendications 10 à 12, **caractérisé en ce que** l'identifiant est authentifié par le biais d'un certificat à signature numérique émis par une autorité de certification, alors que le certificat contient une référence à une entrée spécifique figurant dans la base de données.

14. Système selon l'une quelconque des revendications 10 à 13, **caractérisé en ce que** les informations relatives aux détails prédéterminés de l'abonné ne permettent pas d'identifier l'abonné.

15. Système selon l'une quelconque des revendications 10 à 14, englobant la base de données, cette base de données étant une base de données externe, alors que les informations comportent des données d'autorisation que le tiers peut utiliser en ce qui concerne des transactions destinées à être effectuées en conjonction avec l'abonné au moins partiellement par l'intermédiaire du système (8), l'identifiant et les données d'autorisation étant associées l'un à l'autre, le système (8) englobant des moyens pour authentifier l'association de l'identifiant et des données d'autorisation suivant une manière acceptée par le tiers, et qui consultent une entrée respective figurant dans la base de données, chaque entrée de la base de données contenant des détails relatifs à un abonné spécifique du réseau.
